# EUROPEAN PATENT APPLICATION

(11) **EP 4 835 803 A1**
(43) Date of publication of application: **04.11.2026**
(21) Application number: 24915580.5
(22) Date of filing: 20.12.2024
(51) Int. Cl.: G06T 5/77, G06T 5/60

(54) **ELECTRONIC DEVICE AND METHOD FOR GENERATING IMAGE USING ARTIFICIAL INTELLIGENCE MODEL, AND NON-TRANSITORY STORAGE MEDIUM**

(30) Priority: 03.01.2024 KR 20240001209; 11.06.2024 KR 20240075924
(71) Applicant: Samsung Electronics Co., Ltd., Suwon-si, Gyeonggi-do 16677 (KR)
(72) Inventor: HUR, Youngjin, Suwon-si Gyeonggi-do 16677 (KR); JEONG, Moonhwan, Suwon-si Gyeonggi-do 16677 (KR); MOON, Chankyoo, Suwon-si Gyeonggi-do 16677 (KR)
(74) Representative: Gulde & Partner
(86) International application number: PCT/KR2024/020862
(87) International publication number: WO 2025/146998

(57) **Abstract**

The present document relates to an electronic device and a method for generating an image using an artificial intelligence model, and a non-transitory storage medium. The electronic device, according to one embodiment, may comprise: a display; a communication circuit; at least one processor comprising a processing circuit; and a memory comprising one or more storage media for storing instructions. The instructions, when executed individually or collectively by the at least one processor, may instruct the electronic device to: by using a user interface containing a first image, acquire a user input requesting for the removal of a first portion in the first image stored in the memory; on the basis of confirming that the first portion is associated with a person, acquire a second image having the first portion excluded from the first image, and first information related to the first portion, wherein the first information includes information for preventing an image area corresponding to the first portion from being generated into the person; and, on the basis of a first command enabling at least one of in-painting or out-painting to be performed on the basis of the second image and the first information by using a generative AI model, perform at least one of the in-painting or the out-painting so as to acquire a third image generated by the generative AI model such that the image area corresponding to the first portion is not associated with the person. Other various embodiments are also possible.

## Description

### [Technical Field]

The present disclosure relates to an electronic device, a method, and a non-transitory storage medium for generating an image using an artificial intelligence model.

### [Background Art]

With the development of digital technology, electronic devices are provided in various forms, such as a smart phone, a tablet personal computer (PC), or a personal digital assistant (PDA). The electronic device is also being developed in a form wearable on a user to improve portability and accessibility of the user. Recently, users have shown great interest in obtaining high-quality images provided by advanced camera equipment, beyond simply capturing and obtaining images using an electronic device. Technologies for generating images using artificial intelligence technology (a generative AI model) in the electronic device are being actively developed. The electronic device may provide a user with an environment for generating an image stored in the electronic device by using an application related to image generation. Among technologies for generating images using artificial intelligence technology (e.g., a generative AI model), inpainting technology that generates and naturally fills a deleted part inside an image and outpainting technology that fills the outside of an input image are provided. In the case of current inpainting and outpainting, a natural image is generated based on an input image, and the final result provides an image that does not give a sense of heterogeneity to the viewing person.

The above-described information may be provided as related art for the purpose of helping understanding of the disclosure. No assertion or determination is raised as to whether any of the foregoing may be applicable as prior art in connection with the disclosure.

### [Detailed Description of the Invention]

### [Technical Solution]

According to an embodiment of the present disclosure, an electronic device may include a display, communication circuitry, at least one processor including processing circuitry, and memory including one or more storage media storing instructions.

According to an embodiment, the instructions, when executed by the at least one processor individually or collectively, cause the electronic device to obtain a user input for requesting to remove a first part of a first image stored in the memory using a user interface including the first image.

According to an embodiment, the instructions, when executed by the at least one processor individually or collectively, cause the electronic device to identify, based on the user input, whether the first part is related to a person.

According to an embodiment, the instructions, when executed by the at least one processor individually or collectively, cause the electronic device to, based on identifying that the first part is related to the person, obtain a second image excluding the first part from the first image and first information related to the first part. The first information includes information for preventing an image region corresponding to the first part from being generated as the person.

According to an embodiment, the instructions, when executed by the at least one processor individually or collectively, cause the electronic device to, based on a first command to perform at least one of inpainting or outpainting based on the second image and the first information using a generative AI model, obtain a third image generated by the generative AI model such that the image region corresponding to the first part is not related to the person by performing at least one of the inpainting or the outpainting.

According to an embodiment, a method of operation in an electronic device includes obtaining a user input for requesting to remove a first part of a first image stored in memory of the electronic device using a user interface.

According to an embodiment, the method includes identifying, based on the user input, whether the first part is related to a person.

According to an embodiment, the method includes identifying, based on the user input, whether the first part is related to a person.

According to an embodiment, the method includes, based on identifying that the first part is related to the person, obtaining a second image excluding the first part from the first image and first information related to the first part. The first information includes information for preventing an image region corresponding to the first part from being generated as the person.

According to an embodiment, the method includes, based on a first command to perform at least one of inpainting or outpainting based on the second image and the first information using a generative AI model, obtaining a third image generated by the generative AI model such that the image region corresponding to the first part is not related to the person by performing at least one of the inpainting or the outpainting.

According to an embodiment, in a non-transitory storage medium storing a program, the program includes instructions executable, when executed by at least one processor of an electronic device, to cause the electronic device to perform an operation of obtaining a user input for requesting to remove a first part of a first image stored in memory of the electronic device using a user interface.

According to an embodiment, in a non-transitory storage medium storing a program, the program includes instructions executable, when executed by at least one processor of an electronic device, to cause the electronic device to perform an operation of identifying, based on the user input, whether the first part is related to a person.

According to an embodiment, in a non-transitory storage medium storing a program, the program includes instructions executable, when executed by at least one processor of an electronic device, to cause the electronic device to perform an operation of, based on identifying that the first part is related to the person, obtaining a second image excluding the first part from the first image and first information related to the first part. The first information includes information for preventing an image region corresponding to the first part from being generated as the person.

According to an embodiment, in a non-transitory storage medium storing a program, the program includes instructions executable, when executed by at least one processor of an electronic device, to cause the electronic device to perform an operation of, based on a first command to perform at least one of inpainting or outpainting based on the second image and the first information using a generative AI model, obtaining a third image generated by the generative AI model such that the image region corresponding to the first part is not related to the person by performing at least one of the inpainting or the outpainting.

A computer-readable non-transitory recording medium according to an embodiment of the present disclosure may store at least one command and/or instructions that, when executed, cause an electronic device to perform the above-described method or operation of the electronic device.

### [Brief Description of Drawings]

FIG. 1 is a block diagram illustrating an electronic device in a network environment according to various embodiments.
FIG. 2 is a view illustrating a configuration of an electronic device according to an embodiment.
FIG. 3 is a view illustrating an example of an image generation model of an electronic device according to an embodiment.
FIGS. 4A and 4B are views illustrating examples for generating an image using an image generation model in an electronic device according to an embodiment.
FIG. 5 is a view illustrating an example of image generation using an image generation model in an electronic device according to an embodiment.
FIG. 6 is a view illustrating an example of image generation using an image generation model in an electronic device according to an embodiment.
FIGS. 7A and 7B are views illustrating examples of image generation using an image generation model in an electronic device according to an embodiment.
FIG. 8 is a view illustrating an example of an operation method in an electronic device according to an embodiment.
FIG. 9 is a view illustrating an example of an operation method in an electronic device according to an embodiment.
FIG. 10 is a view illustrating an example of an operation method for image generation using an image generation model in an electronic device according to an embodiment.
FIGS. 11A and 11C are views illustrating examples of images by inpainting in an electronic device according to an embodiment.
FIG. 12 is a view illustrating an example of an operation method in an electronic device according to an embodiment.
FIG. 13 is a view illustrating an example of an operation method for image generation using an image generation model in an electronic device according to an embodiment.
FIG. 14 is a view illustrating an example of images by outpainting in an electronic device according to an embodiment.

In relation to the description of the drawings, the same or similar reference numerals may be used for the same or similar components.

### [Mode for Carrying out the Invention]

Hereinafter, embodiments of the disclosure will be described in detail with reference to the drawings so that those skilled in the art may easily implement the disclosure. However, the disclosure may be implemented in various different forms and is not limited to the embodiments described herein. In relation to the description of the drawings, the same or similar reference numerals may be used for the same or similar components. Further, in the drawings and the related descriptions, descriptions of well-known functions and configurations may be omitted for clarity and conciseness. The term "user" used in the embodiments of the disclosure may refer to a person using an electronic device or a device using an electronic device (e.g., an artificial intelligence electronic device).

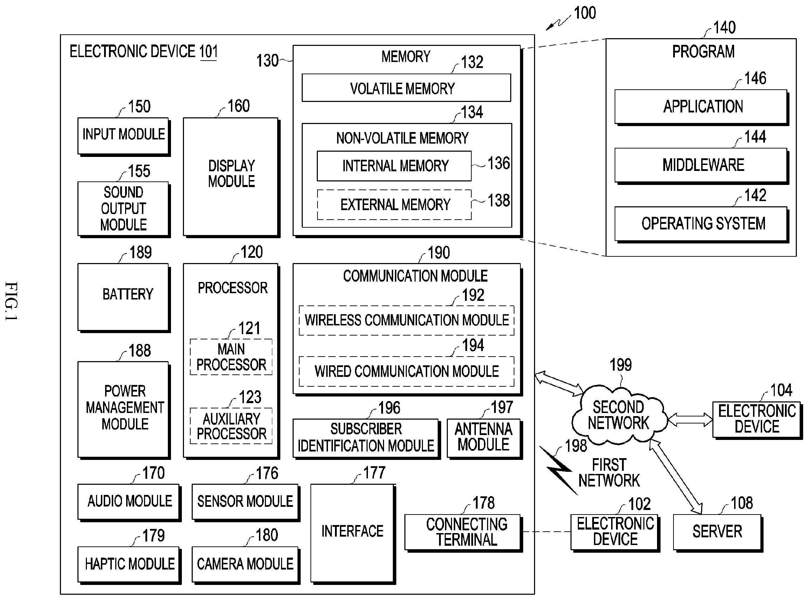

FIG. 1 is a block diagram illustrating an electronic device 101 in a network environment 100 according to various embodiments.

Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160).

The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing 1eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

When an object such as a person or an animal is cut off at a boundary line during inpainting and outpainting, an object having a new identity may be generated, leading to undesired results. An image should be continuously generated based on cut-off object information, but since artificial intelligence technology (e.g., a generative AI model) does not have identity information for every person or animal, it tends to generate a generalized face of a person or animal based on a previously learned person or animal, so that the same person or animal that the user has in mind may not be generated.

Hereinafter, with reference to the drawings, an electronic device and method for generating an image using artificial intelligence technology (a generative AI model) such that an object for a new person or animal that the user does not want or that is meaningless is not generated during inpainting and outpainting and a more natural image is generated will be described in detail.

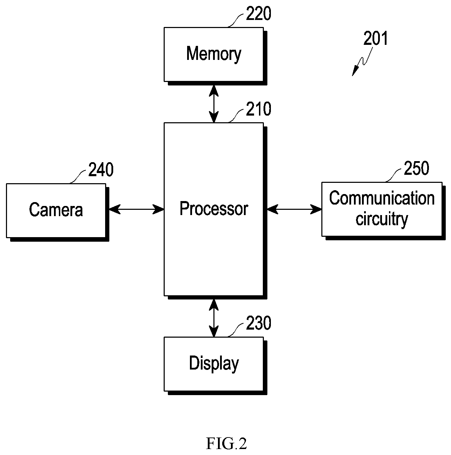

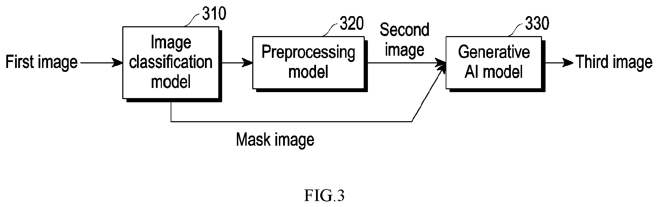

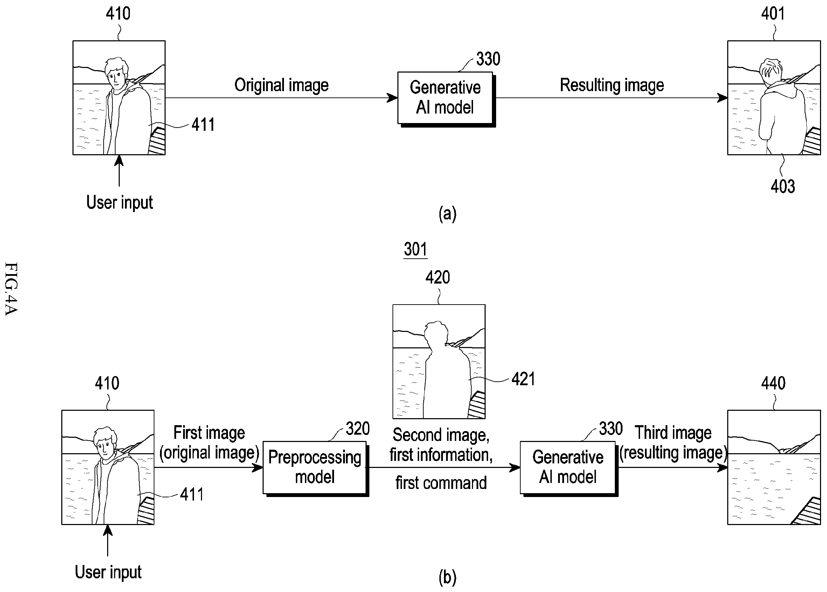

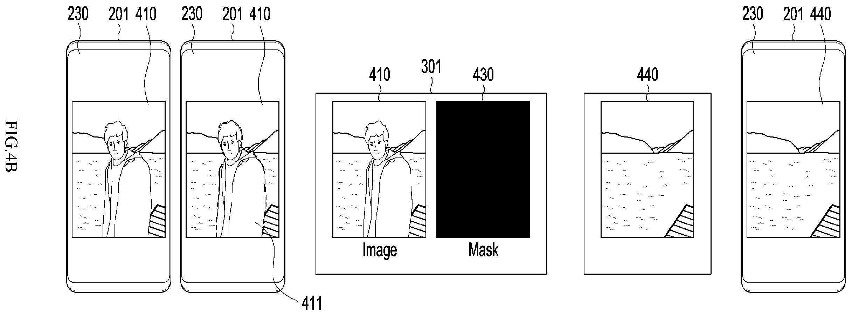

FIG. 2 is a view illustrating a configuration of an electronic device according to an embodiment, FIG. 3 is a view illustrating an example of an image generation model of an electronic device according to an embodiment, and FIGS. 4A and 4B are views illustrating examples for generating an image using an image generation model in an electronic device according to an embodiment. (a) of FIG. 4A illustrates image generation in an electronic device according to a comparative example, and (b) of FIG. 4A may illustrate an example for generating an image using an image generation model in an electronic device according to an embodiment of the present disclosure.

Referring to FIGS. 2, 3, 4A, and 4B, an electronic device 201 (e.g., the electronic device 101 of FIG. 1) according to an embodiment may include at least one processor 210, memory 220, a display 230, a camera 240, and communication circuitry 250. The electronic device 201 is not limited thereto, and may be implemented identically or similarly to the electronic device 101 of FIG. 1, and may further include other components of the electronic device 101 described above in FIG. 1.

According to an embodiment, as illustrated in (b) of FIG. 4A, the electronic device 201 may perform an operation for generating a third image 440 (e.g., a resulting image) by performing inpainting or outpainting using an image generation model 301 such that an image region corresponding to at least a part (e.g., a first part 411) of a first image 410 (e.g., an original image) is not related to a person or an animal. As illustrated in (a) of FIG. 4A, when an electronic device that performs an image generation operation performs inpainting or outpainting on a first image 410 (e.g., an original image) through a generative AI model 330, an image 401 of an object 403 (e.g., a person or an animal) that the user does not want is generated for the first part 411 of the first image 410. As illustrated in (b) of FIG. 4A, the electronic device 201 according to an embodiment of the present disclosure may generate a third image 440 (e.g., a resulting image) by excluding the first part 411 using the image generation model 301 such that the image region corresponding to the excluded first part 411 is not related to a person or an animal. The image generation model 301 is a component composed of software, and may be stored in the memory 220. The electronic device 201 may delete at least one part (e.g., the first part 411) representing at least one of a person or an animal included in the first image 410 using the image generation model 301, and may generate a new image (e.g., the third image 440) by inpainting or outpainting the deleted at least one part using a generative artificial intelligence (AI) model 330. Here, the first image may be an image captured by the camera 240 or an image obtained from an external electronic device by the communication circuitry 250, and may be stored in the memory 220. The first image may include object(s) representing a thing, a person, an animal, and/or a plant.

According to an embodiment, the electronic device 201 may obtain a user input for requesting to remove the first part 411 of the first image 410 stored in the memory 130 using the image generation model 301, and identify, based on the user input, whether the first part is related to a person or an animal. According to an embodiment, the electronic device 201 may, based on identifying that the first part 411 is related to a person or an animal using the image generation model 301, obtain a second image 420 excluding the first part 411 from the first image 410 and first information related to the first part 411. Here, the first information may include information for preventing an image region 421 corresponding to the first part 411 from being generated as a person or an animal.

According to an embodiment, the image generation model 301 may include an image classification model 310, a preprocessing model 320, and a generative AI model 330. The image generation model 301 is not limited thereto, and may further include another model required for image generation, or may not include the generative AI model 330. For example, the generative AI model may be included in an external electronic device (e.g., a server). For example, the generative AI model 330 may represent an artificial intelligence (AI) model that newly creates similar content by utilizing content such as text, audio, and/or images. The generative AI model 330 may learn patterns of content and generate new content as an inference result. For example, in the image field, the generative AI model 330 may generate an image that imitates features of a specific image.

According to an embodiment, the electronic device 201 may obtain a first command to perform at least one of inpainting or outpainting on the image region 421 corresponding to the first part 411 based on the second image 420 and the first information using the generative AI model 330, and provide the obtained first command to the generative AI model 330 to obtain a third image 440 generated by the generative AI model 330 such that the image region corresponding to the first part 411 is not related to a person or an animal. Here, the first information may include a mask image 430 related to the first part 411. The mask image 430 may include a graphic object set to distinguish the first part 411 and information for preventing a part corresponding to the graphic object from being generated as the person or the animal. According to an embodiment, when the generative AI model 330 is included in an external electronic device, the electronic device 201 may transmit the first command to the external electronic device via communication circuitry (e.g., the communication module 190 of FIG. 1 and the communication circuitry 250 of FIG. 2), and obtain the third image generated by the generative AI model from the external electronic device via the communication circuitry.

According to an embodiment, the image classification model 310 may segment at least one object (e.g., a first part) representing a person or an animal and a background image (e.g., a background part) included in an original image (e.g., the first image 410) in pixel units, and obtain a mask image based on segmentation information (e.g., first information). The image classification model 310 may identify the first part related to a person or an animal to be deleted in the first image 410, and transfer the first image 410 and the first information corresponding to the identified first part to the preprocessing model 320. The first information may include mask information (e.g., first mask information) related to the first part 411. According to an embodiment, the image classification model 310 may transfer the mask image 430 including the mask information (e.g., first mask information) related to the identified first part 411 to the generative AI model 330.

According to an embodiment, the image segmentation model 310 may obtain the mask image 430 including the mask information (e.g., first mask information) related to the first part 411 by performing an image segmentation operation on the first image 410, a classification operation of classifying the at least one segmented object as a person or an animal, selecting, in response to a user input, the first part related to the person or the animal in the first image 410 or generating a bounding box including the first image 410, and/or clicking four points of upper, lower, left, and right of the first part. Here, the mask information related to the first part 411 may include a graphic object set to distinguish the first part 411 and information for preventing a part corresponding to the graphic object from being generated as a person or an animal.

According to an embodiment, the image segmentation model 310 may extract features from an image to recognize at least one object in the image and identify its position. For example, the features extracted here may include color, texture, and/or shape. The image classification model 310 may use such features to partially construct an image, create a segment map, and define information based on pixel-unit boundaries. When an image is divided into segments, the image classification model 310 may segment each segment into an object (e.g., a part related to a person or an animal) or a background (e.g., a background part), and the image classification operation may be performed based on information learned through a specified deep learning. The image classification model 310 may identify a bounding box (e.g., a bounding box) around the object to identify the position of the object in the image. For example, the bounding box may refer to a set of four coordinates that define the boundary of the object.

According to an embodiment, the preprocessing model 320 may delete the first image 410 and the first part 411 related to the identified object (e.g., an object related to a person or an animal) from the first image 410, obtain a second image 420 in which the first part 411 is deleted (e.g., removed or excluded), and transfer the second image 420 and the first information to the generative AI model 330. Here, the first information may include information for preventing the image region corresponding to the first part 411 from being generated as the person or the animal. According to an embodiment, the preprocessing model 320 may obtain a first command to perform at least one operation of inpainting or outpainting based on the second image and the first information by the generative AI model 330, and transfer (e.g., provide) the obtained first command to the generative AI model 330.

According to an embodiment, the generative AI model 330 may perform at least one operation of inpainting or outpainting based on the second image 420 and the first information transferred from the preprocessing model 320 according to the first command to perform at least one operation of inpainting or outpainting, and generate a third image 440 (e.g., a resulting image) such that the image region corresponding to the first part 411 is not related to a person or an animal. Here, the first information may include mask information related to the first part 411. According to an embodiment, the processor 210 may control the overall operation of the electronic device 201. For example, the processor 210 may be implemented identically or similarly to the processor 120 of FIG. 1. According to an embodiment, the processor 210 may, in response to a request to execute an operation for image generation, execute an application related to an image (or image execution), and control the display 230 to display the first image 410 through an execution screen of the executed application. According to an embodiment, the processor 210 may generate (or obtain) a new third image by editing or modifying the first image using the image generation model 301.

According to an embodiment, the processor 210 may segment a background and at least one object in the first image 410 using the image classification model 310, and obtain result information on the segmented at least one object. The image classification model 310 may include a specified deep learning model. The processor 210 may, using the specified deep learning model, identify whether the at least one object segmented in the first image is an object representing at least one of a person or an animal to obtain classification information, and perform an operation of detecting a face in the first part 411 related to the object representing at least one of the person or the animal (e.g., human/pet segmentation). The classification information (e.g., classification information) may include first information on the first part classified as at least one of the person or the animal and information on the background part. The classification information may include information for filling the first part classified as at least one of the person or the animal with a single color (or a different single color for each object) and/or position information of the first part.

According to an embodiment, the processor 210 may, using the image classification model 310, identify a first part 411 satisfying a predetermined deletion condition among the at least one classified part based on the obtained classification information. Here, the identified first part 411 may be a region to be deleted from the first image 410. According to an embodiment, the processor 210 may, using the image classification model 310, obtain the first information corresponding to the first part 411, and generate (or obtain) the mask image 430 based on the obtained first information. The processor 210 may generate the mask image 430 by adding the first information to a mask. The mask may include mask information expressed as binary information corresponding to the first image 410.

According to an embodiment, the processor 210 may, using the preprocessing model 320, delete the first part 411 from the first image 410 based on the first information, and generate (or obtain) the second image 420 in which the first part 411 is deleted.

According to an embodiment, the processor 210 may, using the generative AI model 330, perform at least one of inpainting or outpainting based on the second image and the mask image 430, and generate (or obtain) the third image 440 such that the image region corresponding to the first part deleted by performing at least one of the inpainting operation or the outpainting operation is not related to a person or an animal. The processor 210 may, using the inpainting operation or the outpainting operation, apply a simulated image generated by simulating a background part of a region adjacent to the first part 411 to the second image 420. The processor 210 may generate the third image 440 in which the image region is not related to a person or an animal by applying the generated simulated image to the image region corresponding to the deleted first part 411.

According to an embodiment, the processor 210 may control the display 230 to display the third image 440 or control the communication circuitry 250 to transmit the third image 440 to an external electronic device.

According to an embodiment, the processor 210 is a hardware module or a software module (e.g., an application program), and may be a hardware component (function) or a software element (program) including at least one component provided in the electronic device 201. According to an embodiment, the processor 210 may include, for example, one or a combination of two or more of hardware, software, or firmware. The processor 210 may be configured by omitting at least some of the components, or by further including other components for performing an image processing operation in addition to the components.

According to an embodiment, the memory 220 (e.g., the memory 130 of FIG. 1) may store an application. For example, the memory 220 may store an application (function or program) related to an image (or image generation), an application related to image management, or an application related to generative AI. The memory 220 may store a first image (e.g., an original image) captured through an external electronic device or a camera, an obtained second image (e.g., an image for editing), an obtained third image (e.g., an edited resulting image), and information related to image editing.

According to an embodiment, the memory 220 may store various data generated during the execution of the program 140, including a program used for a function operation (e.g., the program 140 of FIG. 1). For example, the memory 220 may include a program 140 area and a data area (not illustrated). The program 140 area may store program information related to the operation of the electronic device 201, such as an operating system (OS) (e.g., the operating system 142 of FIG. 1) that boots the electronic device 201. The data area (not illustrated) may store transmitted and/or received data and generated data according to various embodiments. Further, the memory 220 may be configured to include at least one storage medium of a flash memory, a hard disk, a multimedia card micro type memory (e.g., secure digital (SD) or extreme digital (XD) memory), random access memory (RAM), or read only memory (ROM).

According to an embodiment, the display 230 (e.g., the display module 160 of FIG. 1) may display an execution screen of an application related to an image (or image generation). The display 230 may, under the control of the processor 210, display information related to image editing, the first image, or the third image. The display 230 may, under the control of the processor 210, display the second image for editing when performing image editing. According to an embodiment, the display 230 may be implemented in the form of a touch screen. When the display 230 is implemented together with an input module in the form of a touch screen, it may display various information generated according to a user's touch operation. According to an embodiment, the display 230 may include at least one of a liquid crystal display (LCD), a thin film transistor LCD (TFT-LCD), organic light emitting diodes (OLED), a light emitting diode (LED), an active matrix organic LED (AMOLED), a flexible display, or a 3 dimension display. Further, some of these displays may be configured as a transparent type or a light transmissive type so that the outside may be viewed through them. This may be configured in the form of a transparent display including a transparent OLED (TOLED). According to an embodiment, in addition to the display 230, another display module (e.g., an extended display or a flexible display) mounted may be further included.

According to an embodiment, the camera 240 (e.g., the camera module 180 of FIG. 1) may capture a first image (e.g., an original image) to be used for image editing.

According to an embodiment, the communication circuitry 250 (e.g., the communication module 190 of FIG. 1) may communicate with an external electronic device (e.g., the electronic devices 102, 104 of FIG. 1, the server 108 of FIG. 1, or another user's electronic device). For example, the communication circuitry 250 may transmit a first image, a second image, and/or a third image to an external electronic device, or receive a first image from an external electronic device. The communication circuitry 250 may receive an application and/or information related to an image (or image editing) from an external electronic device and/or transmit it to an external electronic device. According to an embodiment, the communication circuitry 250 may include a cellular module, a wireless-fidelity (Wi-Fi) module, a Bluetooth module, or a near field communication (NFC) module.

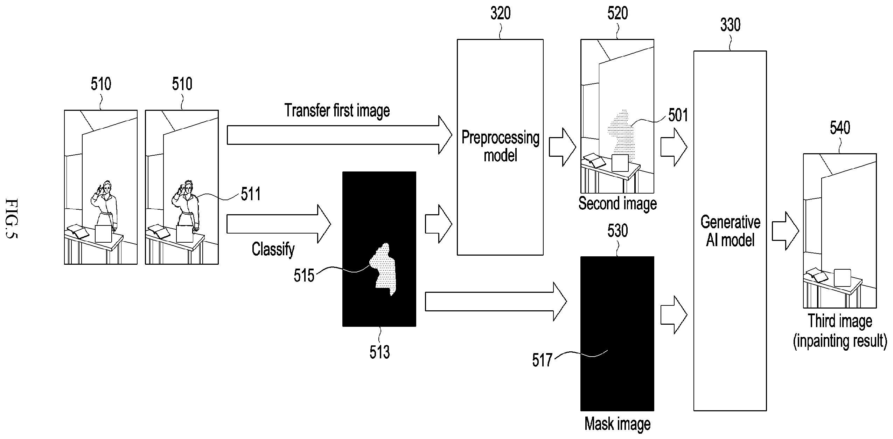

FIG. 5 is a view illustrating an example of image generation using an image generation model in an electronic device according to an embodiment.

Referring to FIGS. 2 to 5, according to an embodiment, the processor 210 of the electronic device 201 may display a first image 510 (e.g., the first image 410 of FIGS. 4A and 4B) stored in the memory 220 on the display 230. The processor 210 may segment the first image 510 into at least one part corresponding to at least one object and a part corresponding to a background through an image classification model (e.g., the image classification model 310 of FIG. 3), and obtain result information 513 (or result information 513 of the image classification operation) including classification information for each of the segmented parts. According to an embodiment, the processor 210 may, based on the result information, identify a first part corresponding to at least one object classified as a person or an animal, and obtain the first information on the identified first part 511 (e.g., the first part 411 of FIGS. 4A and 4B). According to an embodiment, the processor 210 may automatically identify the first part 511, or identify the selected first part 511 in response to a user's object selection input.

According to an embodiment, the processor 210 may identify whether the first part 511 identified through the image classification model 310 represents at least one of a person or an animal. The processor 210 may, based on the first part 511 representing at least one of the person or the animal, identify whether a face exists in the first part 511 based on information learned through deep learning. The processor 210 may, when a face exists (e.g., is detected) in the first part 511, obtain the mask image 530 by adding the first information 515 corresponding to the first part 511 (e.g., including first mask information 517 corresponding to the first information 515).

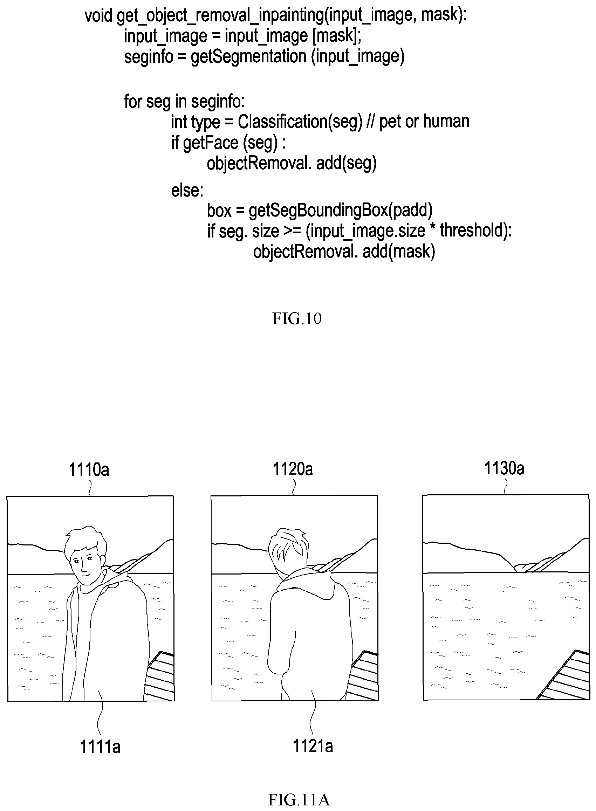

According to an embodiment, the processor 210 may identify the first part 511 that needs deletion from the at least one classified object, and when no face exists (e.g., is not detected or is not identified) in the first part 511 that needs deletion, generate (e.g., identify or obtain) a bounding box (e.g., a first bounding box) for the identified first part 511, and identify a ratio (e.g., a first ratio) occupied by the identified first part 511 (e.g., the size (seg.size) of an object (getFace(seg)) of FIG. 10) in the generated bounding box. The bounding box (e.g., the first bounding box) is a box (e.g., a rectangle) indicating a region to be padded through inpainting, and may be generated to identify the size of the identified first part 511 (e.g., a segmentation region). According to an embodiment, the processor 210 may, when the ratio (e.g., the first ratio) occupied by the identified first part 511 in the identified region (e.g., the first bounding box) is greater than or equal to a threshold (e.g., a first threshold), add the first information on the identified first part 511 to the mask image 530. Here, the threshold (e.g., the first threshold) may be set to a different value depending on a person or an animal (e.g., a value of approximately 30% for a person, and a value of approximately 50% for an animal). The processor 210 may, when the ratio occupied by the first part 511 in the generated bounding box (e.g., the first bounding box) is less than the threshold, identify whether a next first part 511 that needs deletion exists. The processor 210 may, when a next part (e.g., a second part) that needs deletion exists, repeat the above-described operation to add information (e.g., second information) on the additionally identified part to the mask image 530.

According to an embodiment, the processor 210 may, using the preprocessing model 320, obtain (or generate) the second image 520 in which the identified first part 511 is deleted (e.g., removed or excluded) based on the classification information (e.g., the first information 515) on the first part 511 (or the part where the face does not exist) identified by the image classification model 310 and the first image 510.

According to an embodiment, the processor 210 may, using the generative AI model 330, perform an inpainting operation on the image region 501 corresponding to the deleted first part 511 based on the mask image 530 transferred from the image classification model 310 and/or the second image 520 and the first information transferred from the preprocessing model 320, and simulate the background of a region adjacent to the image region 501 to obtain a simulated image. The processor 210 may, using the generative AI model 330, newly generate an image of the image region 501 such that it is not related to a person or an animal by applying the simulated image to the second image 520, and obtain (or generate) a third image 540 including the image region 501 generated as an image not related to a person or an animal.

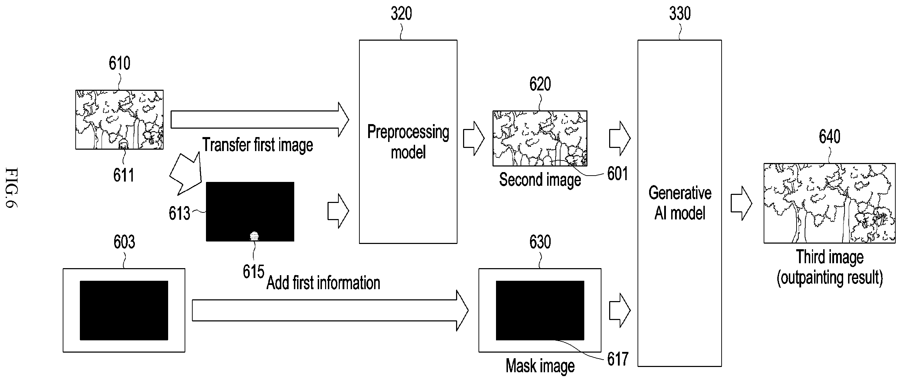

FIG. 6 is a view illustrating an example of image generation using an image generation model in an electronic device according to an embodiment.

Referring to FIGS. 2 to 4 and 6, according to an embodiment, the processor 210 of the electronic device 201 may display a first image 610 (e.g., the first image 410 of FIGS. 4A and 4B) stored in the memory 220 on the display 230. The processor 210 may segment, through an image classification model (e.g., the image classification model 310 of FIG. 3), a first part 611 (e.g., the first part 411 of FIGS. 4A and 4B) related to at least one object (e.g., a person or an animal) and a background part in the first image 610, and obtain result information 613 (or result information 613 of an image segmentation operation) including first information 615 on the segmented first part and information on the background part. According to an embodiment, the processor 210 may obtain the first information 615 on the first part 611 classified as a person or an animal, and automatically identify the first part 611 using the obtained first information 615, or identify the selected first part 611 in response to a user's selection input. According to an embodiment, the processor 210 may identify whether the first part 611 identified through the image classification model 310 represents at least one of a person or an animal. The processor 210 may, based on the first part 611 representing at least one of the person or the animal, identify whether the first part 611 is located at a boundary line of the first image 610 (e.g., whether it is cut off by the boundary line). The processor 210 may, when the first part 611 is located at the boundary line, identify whether the first part 611 is an object to be deleted (e.g., removed or excluded) by checking whether a face is detected in the first part 611. According to an embodiment, it may be identified whether the first part 611 is located at the boundary line and a face having a complete facial form is detected in the first part 611. Here, the complete facial form may be identified based on information learned through deep learning. As a result of the identification, when a face having a complete facial form is not detected, the processor 210 may determine that face detection has failed and identify the first part 611 as a part for deletion (e.g., removal or exclusion) processing. According to an embodiment, when it is identified that the first part 611 is located at the boundary line and a face exists in the first part 611 based on information learned through deep learning, the processor 310 may generate a bounding box (e.g., a second bounding box representing a region to be padded by outpainting) for the first part 611, and identify a ratio (e.g., a second ratio) occupied by the bounding box (width) in the first image 610. The processor 210 may, based on the ratio occupied by the bounding box (width) in the first image 610 being less than a threshold (e.g., a second threshold), identify the first part 611 as a part for deletion (e.g., removal or exclusion) processing. Here, the threshold (e.g., the second threshold) may be set to, for example, a value of approximately 20% in the case of a person, and a value of approximately 10% in the case of an animal. According to an embodiment, when it is identified that the first part 611 is located at the boundary line and that no face exists in the first part 611 (e.g., face detection failed), the processor 210 may identify the first part 611 as a part for deletion processing as only a body is detected in the first part 611.

According to an embodiment, the processor 210 may, as it identifies the first part 611 as an object for deletion processing, add the first information 615 corresponding to the first part 611 to a mask 603 to obtain first mask information 617 corresponding to the first information 615, and obtain the mask image 630 including the first mask information 617. The processor 210 may transfer the mask image 630 to the generative AI model 330. According to an embodiment, the processor 210 may, as it identifies the first part 611 as a part for deletion processing, transfer the result information 613 (or the result information 613 of the image segmentation operation) including the first information 615 or the first information 615 individually to the preprocessing model 320, and transfer the first image 610 to the preprocessing model 320.

According to an embodiment, the processor 210 may, using the preprocessing model 320, delete the first part 611 identified in the first image 610 based on the first information 615 on the first part 611 identified by the image classification model 310 and the first image 610, and obtain (or generate) the second image 620 (e.g., the second image 420 of FIGS. 4A and 4B) including an image region 601 corresponding to the deleted first part 611.

According to an embodiment, the processor 210 may, using the generative AI model 330, simulate the background of a region adjacent to the image region 601 through an outpainting operation on the image region 601 corresponding to the deleted first part 611 based on the mask image 630 transferred from the image classification model 310 and/or the second image 620 and the first information transferred from the preprocessing model 320, to obtain a simulated image. The processor 210 may, using the generative AI model 330, newly generate an image of the image region 601 such that it is not related to a person or an animal by applying the simulated image to the second image 620, and obtain (or generate) a third image 640 including the image region 601 generated as an image not related to a person or an animal.

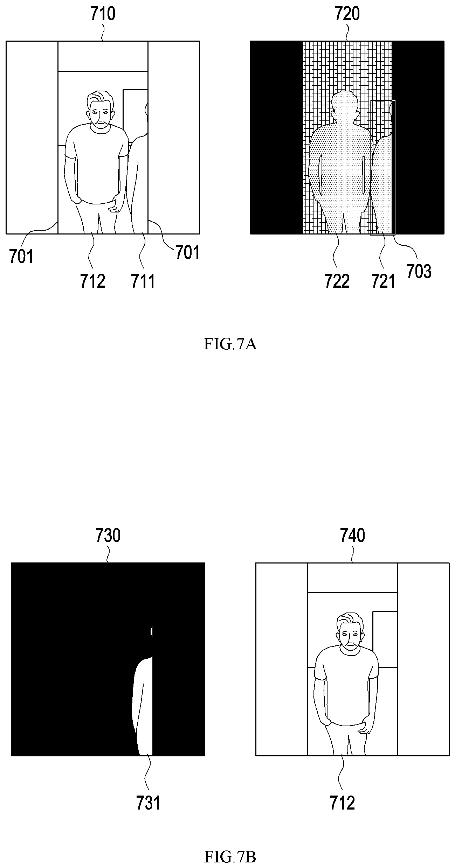

FIGS. 7A and 7B are views illustrating examples of image generation using an image generation model in an electronic device according to an embodiment.

Referring to FIGS. 7A and 7B, according to an embodiment, the processor 210 of the electronic device 201 may segment, through an image classification model (e.g., the image classification model 310 of FIG. 3), a plurality of parts (e.g., a first part 711 and a second part 712) related to at least one object (e.g., a person or an animal) and a part related to the background (e.g., the remaining parts excluding the first part 711 and the second part 712) in a first image 710 (e.g., the original image or the first image 410 of FIGS. 4A and 4B). The processor 210 may classify the first part 711 and the second part 712 representing at least one of a person or an animal in the first image 710. The processor 210 may obtain first information 721 and second information 722 for each of the first part 711 and the second part 712 classified in result information (e.g., an image) 720 corresponding to classification information obtained by classifying the first image 710. The processor 210 may sequentially analyze the first part 711 and the second part 712 to identify whether they are located at a boundary line 701 (e.g., whether the object is cut off by the boundary line). For example, the processor 210 may identify that the first part 711 is located at the boundary line, and the second part 712 is not located at the boundary line (e.g., not cut off by the boundary line). The processor 210 may identify whether a face is detected in the first part 711 located at the boundary line using an algorithm related to face detection. The processor 210 may, when face detection in the first part 711 fails or when the ratio occupied by a bounding box (width) (e.g., the second bounding box) 703 for the first part 711 in the first image 710 is less than a threshold, identify the first part 711 as a part to be deleted (e.g., removed or excluded) from the first image 710 so as not to generate a face for the first part 711 during outpainting. Here, the processor 210 may identify that face detection has failed when no face exists in the first part 711, or when a face having a complete facial form does not exist in the first part 711.

According to an embodiment, the processor 210 may obtain the mask image 730 including the first information 721 corresponding to the first part 711 to be deleted, or including first mask information 731 corresponding to the first information 721. According to an embodiment, the processor 210 may, using a preprocessing model (e.g., the preprocessing model 320 of FIGS. 3, 4A, and 6), delete (e.g., remove or exclude) the first part 711 identified in the first image 710 based on the first information 721 on the first part 711 identified by an image classification model (e.g., the image classification model 310 of FIG. 3). According to an embodiment, the processor 210 may transfer the second image (not illustrated) in which the first part 711 is deleted from the preprocessing model to a generative AI model (e.g., the generative AI model 330 of FIGS. 3, 4A, and 6).

According to an embodiment, the processor 210 may, using the generative AI model (e.g., the generative AI model 330 of FIGS. 3, 4A, and 6), generate an image of the image region corresponding to the deleted first part 711 through an outpainting operation (e.g., naturally filling in based on an adjacent background image) based on the mask image 730 transferred from the image classification model (e.g., the image classification model 310 of FIG. 3) and/or the second image (e.g., an image in which the first part 711 is deleted) and the first information 721 transferred from the preprocessing model (e.g., the preprocessing model 320 of FIGS. 3, 4A, and 6). According to an embodiment, when the outpainting operation on the first part 711 is completed, the processor 210 may, using the generative AI model, obtain (or generate) a resulting image 740 (e.g., a third image) that excludes the first part 711 and includes only the second part 712.

According to an embodiment, the processor 210 may control the display 230 to display, on an execution screen of an application related to an image (or image generation), the first image (e.g., the original image, the first image 410 of FIGS. 4A and 4B, the first image 510 of FIG. 5, the first image 610 of FIG. 6, and/or the first image 710 of FIG. 7) and the third image (e.g., the third image 440 of FIGS. 4A and 4B, the third image 540 of FIG. 5, the third image 640 of FIG. 6, and/or the third image 740 of FIG. 7) obtained through an inpainting or outpainting operation by the generative AI model. The processor 210 may control the communication circuitry 250 to transmit the obtained third image to an external electronic device.

According to an embodiment, the processor 210 may transmit the second image including the first region corresponding to the deleted first part (e.g., the second image 420 of FIGS. 4A and 4B, the second image 520 of FIG. 5, and/or the second image 620 of FIG. 6) and the mask image (e.g., the mask image 430 of FIGS. 4A and 4B, the mask image 530 of FIG. 5, and/or the mask image 630 of FIG. 6) to an external electronic device (e.g., a server) via the communication circuitry 250. The external electronic device (e.g., the server) may, using a generative AI model for image generation, perform an in/out painting operation on an image region corresponding to the first part of the second image based on the second image and the mask image (e.g., including the first mask information corresponding to the first information) to generate the image region as an image not related to a person or an animal, and generate a third image including the image region having the generated image not related to a person or an animal. According to an embodiment, the processor 210 may receive the third image generated by the external electronic device (e.g., the server), and store the received third image in the memory 220 and/or display it on the display 230.

An electronic device (e.g., the electronic device 101 of FIG. 1 and/or the electronic device 201 of FIGS. 2 and 4) according to an embodiment may implement a software module (e.g., the program 140 of FIG. 1) related to an image (or image generation). The memory of the electronic device (e.g., the memory 130 of FIG. 1 and/or the memory 220 of FIG. 2) may store commands (e.g., instructions) to implement the software module. At least one processor (e.g., the processor 120 of FIG. 1 and/or the processor 210 of FIG. 2) may execute the commands stored in the memory to implement the software module, and may control hardware (e.g., the sensor module 176 of FIG. 1, the camera module 180, the communication module 190 of FIG. 1 and/or the communication circuitry 250 of FIG. 2, the display module 160 of FIG. 1 and/or the display 230 of FIG. 2) associated with the function of the software module.

The software module of an electronic device (e.g., the electronic device 101 of FIG. 1 and/or the electronic device 201 of FIG. 2) according to an embodiment may be configured to include a kernel (or HAL), a framework (e.g., the middleware 144 of FIG. 1), and an application (e.g., the application 146 of FIG. 1). At least a part of the software module may be preloaded on the electronic device, or may be downloadable from a server (e.g., the server 108 of FIG. 1).

According to an embodiment, the kernel may include, for example, a system resource manager or a device driver, but is not limited thereto, and may be configured to further include other modules. The system resource manager may perform at least one of control, allocation, or recovery of system resources. The device driver may include, for example, a display driver, a camera driver, a Bluetooth driver, a shared memory driver, a USB driver, a keypad driver, a WIFI driver, an audio driver, or an inter-process communication (IPC) driver.

According to an embodiment, the framework may provide functions commonly required by applications, or provide various functions to an application through an application programming interface (API) (not illustrated) so that the application may efficiently use limited system resources within the electronic device. The framework may include a module forming a combination of various functions of the components described above in FIGS. 1 and 2. The framework may provide modules specialized for each type of operating system (e.g., the operating system 142 of FIG. 1) to provide differentiated functions. The framework may dynamically delete some existing components or add new components.

According to an embodiment, the application may be configured to include an application (e.g., a module, a manager, or a program) related to an image (or image generation). The application may include an application received from an external electronic device (e.g., the server 108 or the electronic devices 102, 104). According to an embodiment, the application may include a preloaded application or a third party application downloadable from a server. The components of the software module according to the illustrated embodiment and the names of the components may vary depending on the type of operating system. According to an embodiment, at least a part of the software module may be implemented as software, firmware, hardware, or a combination of at least two or more of these. At least a part of the software module may be implemented (e.g., executed) by, for example, a processor (e.g., AP). At least a part of the software module may include at least one of, for example, a module, a program, a routine, sets of instructions, or a process for performing at least one function.

As such, in an embodiment, the main components of the electronic device have been described through the electronic device 101 of FIG. 1 and the electronic device 201 of FIG. 2. However, in various embodiments, not all of the components illustrated in FIGS. 1 and 2 are essential components, and the electronic devices 101, 201 may be implemented by more components than the illustrated components, or may be implemented by fewer components. Further, the positions of the main components of the electronic devices 101, 201 described above through FIGS. 1 and 2 may be changeable according to various embodiments.

According to an embodiment, an electronic device (e.g., the electronic device 101 of FIG. 1 and/or the electronic device 201 of FIGS. 2 and 4B) may include a display (e.g., the display module 160 of FIG. 1 and/or the display 230 of FIG. 2), communication circuitry (e.g., the communication module 190 of FIG. 1 and/or the communication circuitry 250 of FIG. 2), at least one processor (e.g., the processor 120 of FIG. 1 and/or the processor 210 of FIG. 2) including processing circuitry, and memory (e.g., the memory 130 of FIG. 1 and/or the memory 220 of FIG. 2) storing instructions.

According to an embodiment, the instructions, when executed by the at least one processor individually or collectively, may cause the electronic device to obtain a user input for requesting to remove a first part (e.g., the first part 411 of FIGS. 4A and 4B, the first part 511 of FIG. 5, and the first part 611 of FIG. 6) of a first image (e.g., the first image 410 of FIGS. 4A and 4B, the first image 510 of FIG. 5, and the first image 610 of FIG. 6) stored in the memory using a user interface including the first image.

According to an embodiment, the instructions, when executed by the at least one processor individually or collectively, may cause the electronic device to identify, based on the user input, whether the first part is related to a person.

According to an embodiment, the instructions, when executed by the at least one processor individually or collectively, may cause the electronic device to, based on identifying that the first part is related to the person, obtain a second image (e.g., the second image 420 of FIGS. 4A and 4B, the second image 520 of FIG. 5, and the second image 620 of FIG. 6) excluding the first part from the first image and first information related to the first part. According to an embodiment, the first information may include information for preventing an image region corresponding to the first part from being generated as the person.

According to an embodiment, the instructions, when executed by the at least one processor individually or collectively, may cause the electronic device to, based on a first command to perform at least one of inpainting or outpainting based on the second image and the first information using a generative AI model (e.g., the generative AI model 330 of FIGS. 3, 4A, 5, and 6), obtain a third image (e.g., the third image 440 of FIGS. 4A and 4B, the third image 540 of FIG. 5, and the third image 640 of FIG. 6) generated by the generative AI model such that the image region corresponding to the first part is not related to the person by performing at least one of the inpainting or the outpainting.

According to an embodiment, the instructions, when executed by the at least one processor individually or collectively, may cause the electronic device to identify, based on the user input, whether the first part is related to an animal, and based on identifying that the first part is related to the animal, obtain a third image (e.g., the third image 440 of FIGS. 4A and 4B, the third image 540 of FIG. 5, and the third image 640 of FIG. 6) generated by the generative AI model such that the image region corresponding to the first part is not related to the animal by performing at least one of the inpainting or the outpainting based on the first command, and the first information may include information for preventing the image region corresponding to the first part from being generated as the animal.

According to an embodiment, the first information may include mask information related to the first part, and the mask information may include a graphic object set to distinguish the first part and information for preventing a part corresponding to the graphic object from being generated as the person or the animal.

According to an embodiment, the instructions, when executed by the at least one processor individually or collectively, may cause the electronic device to identify whether a face of the person or the animal is detected in the first part, and based on identifying that the face of the person or the animal is detected in the first part, generate the first information related to the first part.

According to an embodiment, the instructions, when executed by the at least one processor individually or collectively, may cause the electronic device to obtain the second image excluding the first part from the first image using a preprocessing model (e.g., the preprocessing AI model 320 of FIGS. 3, 4A, 5, and 6) stored in the memory.

According to an embodiment, the instructions, when executed by the at least one processor individually or collectively, may cause the electronic device to, based on identifying that the face of the person or the animal is not detected in the first part, identify a first ratio value occupied by the first part in a first bounding box including the first part, and based on the first ratio value being greater than or equal to a first threshold, generate the first information related to the first part and obtain the second image excluding the first part from the first image using the preprocessing model.

According to an embodiment, the instructions, when executed by the at least one processor individually or collectively, may cause the electronic device to, based on identifying that the face of the person or the animal is not detected in the first part, identify a second ratio value that a second bounding box including the first part occupies in the first image, and based on the second ratio value being less than a second threshold, generate the first information related to the first part and obtain the second image excluding the first part from the first image using the preprocessing model.

According to an embodiment, the instructions, when executed by the at least one processor individually or collectively, may cause the electronic device to, based on identifying a plurality of parts representing at least one of the person or the animal in the first image, identify whether the plurality of parts are located at a boundary line of the first image, and based on identifying a second part of the first image that is not located at the boundary line among the plurality of parts, maintain the second part in the first image without excluding the second part.

According to an embodiment, the instructions, when executed by the at least one processor individually or collectively, may cause the electronic device to, based on the user input, control the display to display the first image on an execution screen of an application related to image generation, and based on obtaining the third image, control the display to display the third image on the execution screen.

According to an embodiment, the instructions, when executed by the at least one processor individually or collectively, may cause the electronic device to, based on obtaining the third image, control the communication circuitry to transmit the third image to an external electronic device.

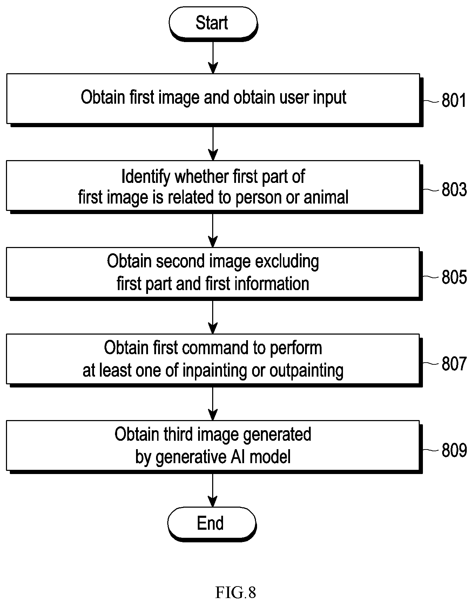

FIG. 8 is a view illustrating an example of an operation method in an electronic device according to an embodiment. In the following embodiment, the operations may be performed sequentially, but are not necessarily performed sequentially. For example, the order of the operations may be changed, and at least two operations may be performed in parallel.

Referring to FIG. 8, in operation 801, an electronic device (e.g., the electronic device 101 of FIG. 1 and/or the electronic device 201 of FIGS. 2 and 4) according to an embodiment may obtain a first image (e.g., an original image), and display the obtained first image on a display (e.g., the display 160 of FIG. 1, the display 230 of FIG. 2). According to an embodiment, in operation 801, the electronic device may obtain a user input for requesting to remove a first part (the first part 411 of FIGS. 4A and 4B, the first part 511 of FIG. 5, and the first part 611 of FIG. 6) of a first image (e.g., the first image 410 of FIGS. 4A and 4B, the first image 510 of FIG. 5, and the first image 610 of FIG. 6) stored in memory (e.g., the memory 130 of FIG. 1 and the memory 220 of FIG. 2). According to an embodiment, the electronic device may, before or after obtaining the user input, segment at least one part related to a person or an animal and a part related to a background in the first image using an image classification model (e.g., the image classification model 310 of FIG. 3). The electronic device may, based on the user input, identify a first part to be removed from the at least one part related to the person or the animal.

In operation 803, the electronic device may, based on the user input, identify whether the first part is related to the person or the animal. In operation 805, the electronic device may, based on identifying that the first part is related to the person or the animal, obtain a second image (e.g., the second image 420 of FIGS. 4A and 4B, the second image 520 of FIG. 5, and the second image 620 of FIG. 6) excluding the first part from the first image and first information related to the first part. Here, the first information may include information for preventing an image region corresponding to the first part from being generated as the person or the animal.

In operation 807, the electronic device may obtain a first command to perform at least one of inpainting or outpainting based on the second image and the first information using a generative AI model (e.g., the generative AI model 330 of FIGS. 3, 4A, 5, and 6).

In operation 809, the electronic device may provide the first command to the generative AI model and, using the generative AI model (e.g., the generative AI model 330 of FIGS. 3, 4A, 5, and 6), perform at least one of inpainting or outpainting based on the second image and the first information to obtain the third image 440, 540, 640 generated such that the image region corresponding to the first part is not related to the person or the animal. Here, the generative AI model may be included in the electronic device or included in an external electronic device (e.g., a server). When the generative AI model is included in the external electronic device, the electronic device may transmit the first command to the external electronic device via communication circuitry (e.g., the communication module 190 of FIG. 1 and the communication circuitry 250 of FIG. 2), and obtain the third image generated by the generative AI model from the external electronic device via the communication circuitry.

Hereinafter, the operation method of FIG. 8 described above will be described in more detail with reference to the drawings.

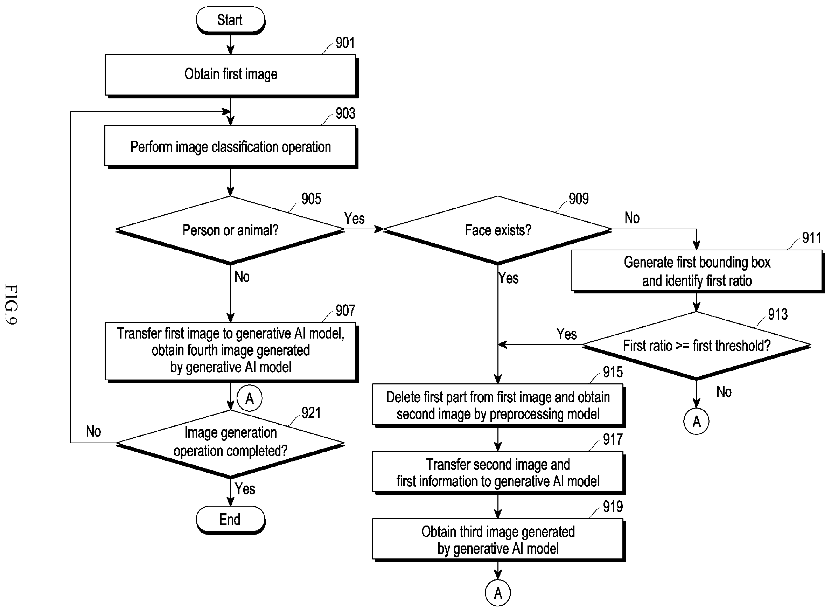

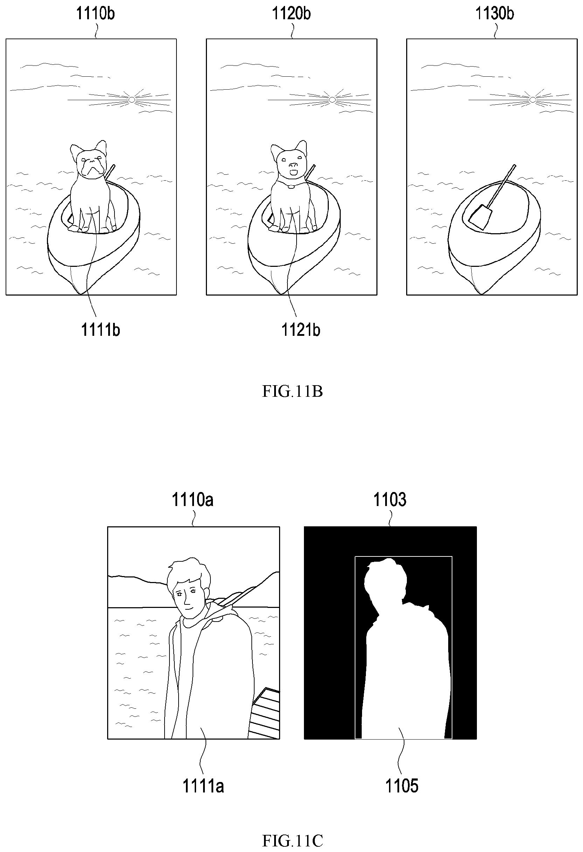

FIG. 9 is a view illustrating an example of an operation method in an electronic device according to an embodiment, FIG. 10 is a view illustrating an example of an operation method for image generation using an image generation model in an electronic device according to an embodiment, and FIGS. 11A and 11B are views illustrating examples of images by inpainting in an electronic device according to an embodiment.

Hereinafter, in the embodiment, the operations may be performed sequentially, but are not necessarily performed sequentially. For example, the order of the operations may be changed, and at least two operations may be performed in parallel. The operation method of FIG. 9 may be performed using an algorithm of an image generation model (e.g., the image generation model 301 of FIG. 3) as illustrated in FIG. 10.

Referring to FIGS. 9, 10, 11A, and 11B, in operation 901, an electronic device (e.g., the electronic device 101 of FIG. 1 and/or the electronic device 201 of FIGS. 2 and 4) according to an embodiment may display first images 1110a, 1110b (e.g., the first image 510 of FIG. 5) stored in memory (e.g., the memory 130 of FIG. 1 and/or the memory 230 of FIG. 2) on a display (e.g., the display module 160 of FIG. 1 and/or the display 230 of FIG. 2). The electronic device may obtain a first image from a camera (e.g., the camera module 180 of FIG. 1) or an external electronic device (e.g., the electronic devices 102, 104 or the server 108 of FIG. 1) and store it in the memory, and when a request to execute image generation is made, obtain the first images 1110a, 1110b stored in the memory (e.g., void get_object_removal_inpainting(input_image, mask) of FIG. 10). In this case, the electronic device may obtain a mask (or mask information) corresponding to the first images 1110a, 1110b (e.g., input_image = input_image[mask] of FIG. 10).

In operation 903, the electronic device may segment at least one object and a background in the first images 1110a, 1110b through an image classification model (e.g., the image classification model 310 of FIG. 3), and perform a segmentation operation of the first images 1110a, 1110b for obtaining classification information (e.g., including first information on the first part and information on the background part) for each of a first part (e.g., the first parts 1111a, 1111b of FIGS. 11A and 11B) related to the at least one segmented object (e.g., a person or an animal) and the background part (e.g., seginfo=getSegmentation(input_image) of FIG. 10).

In operation 905, the electronic device may identify, based on the user input, whether the classified first part is related to a person or an animal (e.g., for seg in seginfo: int type = Classification(seg)//pet or human of FIG. 10). As a result of the identification, when the first part is not related to a person or an animal, the electronic device may perform operation 907. When the first part is related to a person or an animal, the electronic device may perform operation 909.

In operation 907 (operation 905-No), the electronic device may transfer the first images 1110a, 1110b identified in the image classification model and the classification information of the first images 1110a, 1110b to a generative AI model (e.g., the generative AI model 330 of FIGS. 3 and 5), and provide a command (e.g., a second command) to perform an inpainting operation on the first images 1110a, 1110b by the generative AI model. A resulting image (e.g., a fourth image) generated through the inpainting operation by the generative AI model may be obtained. Here, since the generated resulting image (e.g., the fourth image) does not include the first part related to the person or the animal, the electronic device may not perform an inpainting operation on the first images 1110a, 1110b, or even if the inpainting operation is performed, may generate a fourth image in which the parts classified in the first images 1110a, 1110b are not related to a person or an animal. Thereafter, the electronic device may perform operation 921. As another example, even if the original image (e.g., the first image) does not include an object representing at least one of a person or an animal, the electronic device may identify a part to be deleted for an object included in the original image, and perform an inpainting operation on a region corresponding to the identified part.

In operation 909 (operation 905-Yes), the electronic device may identify whether a face exists (e.g., is detected) in the first parts 1111a, 111lb related to the person or the animal classified through the image classification model (e.g., if getFace(seg):). As a result of the identification, when a face exists in the identified first parts 1111a, 1111b, the electronic device may perform operation 915, and when no face exists, may perform operation 911. The electronic device may detect a face in the first parts 1111a, 1111b using information learned through a deep learning technology (e.g., model).

In operation 911 (operation 909-No), the electronic device may, when no face exists in the first parts 1111a, 1111b, generate a region to be padded in the image region corresponding to the deleted first parts 1111a, 1111b (e.g., the first bounding box 1105 of FIG. 11C) based on the first information on the first parts 1111a, 1111b (e.g., the first information 1103 of FIG. 11C) (e.g., else: box = getSegBoundingBox(padd) of FIG. 10). Here, the first information (e.g., the first information 1103 of FIG. 11C) may include, for example, pixel information, padding information, and/or position information. The electronic device may identify a ratio (e.g., a first ratio) occupied by the first parts 111la, 1111b (e.g., the size of an object (seg.size)) in the generated region to be padded (e.g., the first bounding box 1105 of FIG. 11C).

In operation 913, the electronic device may, based on no face existing, identify whether the ratio (e.g., the first ratio) identified in operation 911 is greater than or equal to a first threshold (e.g., input_image.size * threshold) (e.g., if seg.size >= (input_image.size * threshold): of FIG. 10). As a result of the identification, the electronic device may, when greater than or equal to the first threshold, perform operation 915, and when less than the first threshold, perform operation 921. For example, when the first part represents a person, the first threshold may be set to approximately 30%, and when the first part represents an animal, the first threshold may be set to approximately 50%. Accordingly, the electronic device may perform a more robust editing (e.g., filter) when the first part is a person.

The electronic device may obtain (e.g., generate) a mask image (e.g., the mask image 530 of FIG. 5) by adding the first information on the first parts 1111a, 1111b to a mask through the image classification model. The electronic device may transfer the first information and the first images 1110a, 1110b from the image classification model to a preprocessing model (e.g., the preprocessing model 320 of FIGS. 3 and 5). Here, the first information may include mask information (e.g., the mask image 530 of FIG. 5) related to the first part. According to an embodiment, the electronic device may transfer a mask image including first mask information related to the first part to the generative AI model by the image classification model. According to an embodiment, when a face exists in the first part as a result of the identification in operation 909, the electronic device may delete (e.g., remove or exclude) the first part from the first image by the preprocessing model, and obtain (e.g., generate) a second image including an image region corresponding to the deleted first part. Before deleting the first part, the electronic device may obtain (e.g., generate) a mask image (e.g., the mask image 530 of FIG. 5) by adding the first information on the first parts 1111a, 1111b to a mask through the image classification model (e.g., objectRemoval.add(seg) of FIG. 10). According to an embodiment, the electronic device may, when no face exists (e.g., is not detected) in the first part and, as a result of the identification in operation 913, the ratio (e.g., the first ratio) occupied by the first part in the identified region (e.g., the first bounding box) is greater than or equal to the first threshold, obtain (e.g., generate) a mask image (e.g., the mask image 530 of FIG. 5) by adding the first information on the first parts 1111a, 1111b to a mask through the image classification model (e.g., objectRemoval.add(mask) of FIG. 10).

In operation 915 (operation 909-Yes or operation 913-No), the electronic device may delete a region (e.g., a first region) corresponding to a first object 1111a, 1111b in the first images 1110a, 1110b based on the first information and the first images 1110a, 1110b and/or the mask information of the mask image in the preprocessing model. The electronic device may obtain (e.g., generate) a second image (e.g., the second image 520 of FIG. 5) including the deleted region in the preprocessing model.

In operation 917, the electronic device may transfer the obtained second image and the first information to the generative AI model (e.g., the generative AI model 330 of FIG. 3). The electronic device may transfer the mask image from the image classification model or the preprocessing model to the generative AI model. The electronic device may obtain a first command to perform an inpainting operation based on the second image and the first information using the generative AI model 330.

In operation 919, the electronic device may transfer the first command to the generative AI model to obtain a third image generated by the generative AI model such that the image region corresponding to the first part is not related to the person or the animal. The generative AI model may, based on the second image and the first information, perform an inpainting operation on the first part deleted from the second image to generate an image of the image region for the deleted first part, and obtain (e.g., generate) third images 1130a, 1130b (e.g., the third image 540 of FIG. 5) including the image region having the generated image. The electronic device may, using the inpainting operation in the generative AI model, generate a new simulated image by simulating a background part or another part of a region adjacent to the image region corresponding to the deleted first part, and apply the simulated image to the image region corresponding to the deleted first part to generate the image of the image region. The generated image may be generated to be naturally connected to a background image or another part (e.g., an object that does not represent a person or an animal).

Thereafter, the electronic device may identify whether the generation operation of the first images 1110a, 1110b is completed in operation 921, and when completed, terminate the operation, and when not, perform operation 903 again.

In the description of the operation of FIG. 9 described above, operations 903 to 915 may be specific operations for identifying whether a preset condition for identifying whether the first part needs to be deleted is satisfied by the image classification model. For example, when a plurality of parts identified in the first image are identified, operations 903 to 915 may be repeatedly performed. In operation 917, the second image including the image region corresponding to the removed first part is obtained, and in operation 919, an image of the image region corresponding to the deleted first part is generated, and a third image including the image region having the generated image is obtained. For example, when a plurality of parts identified in the first image are identified, classification and classification information may be obtained for all of the plurality of parts identified in operation 903 at once. Accordingly, without repeatedly performing operations 905 to 915, it may be identified whether a preset condition for identifying whether the plurality of parts all at once need deletion is satisfied in operations 905 to 915.

According to an embodiment, the electronic device may, through the operations of FIG. 9 described above, delete the first parts 1111a, 1111b of the first images 1110a, 1110b, generate an image of the image region corresponding to the deleted first part through the inpainting operation, and obtain the third images 1130a, 1130b including the image region having the generated image. Accordingly, as illustrated in FIGS. 11A and 11B, the electronic device may prevent another object 1121a, 1121b (e.g., an image) unintended by the user from being generated through the inpainting operation, as in images 1120a, 1120b generated without applying the operations of FIG. 9.

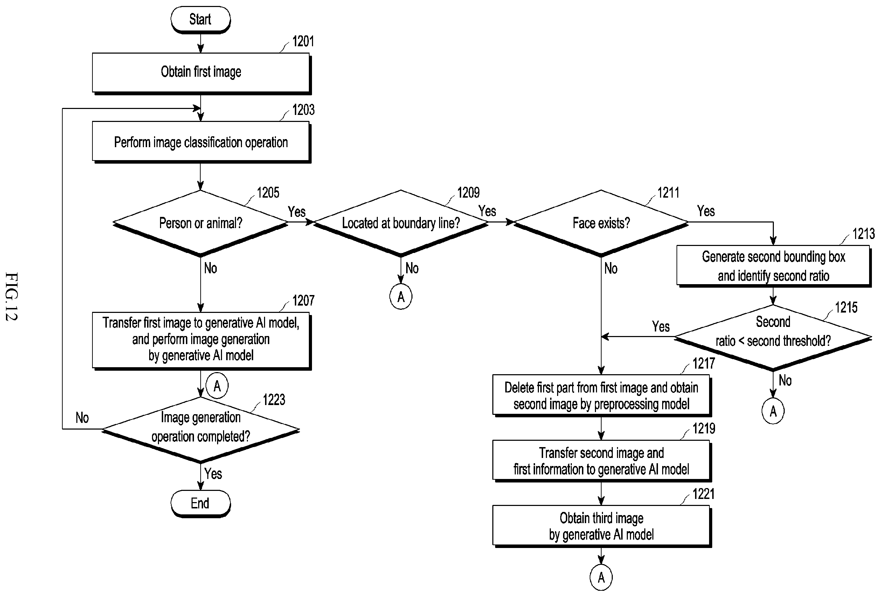

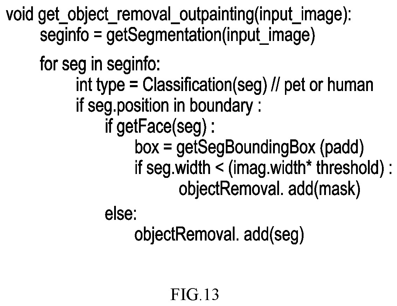

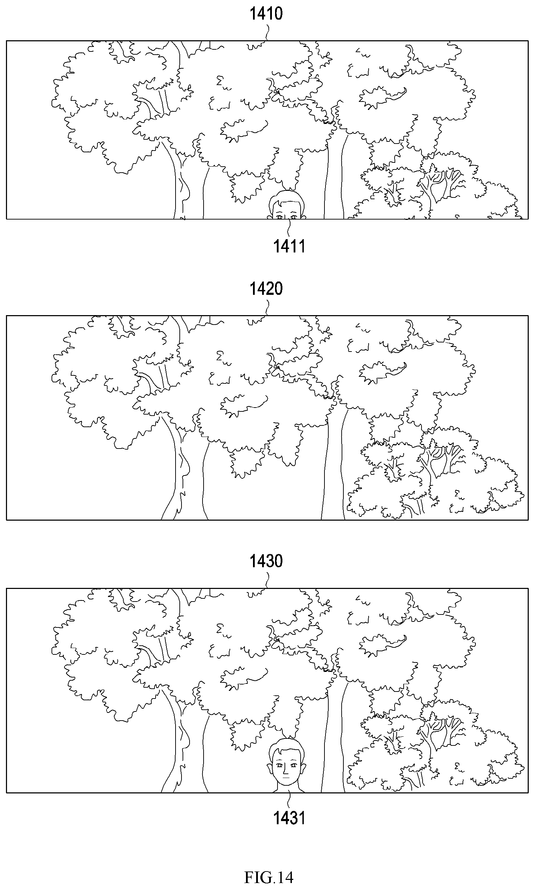

FIG. 12 is a view illustrating an example of an operation method in an electronic device according to an embodiment, FIG. 13 is a view illustrating an example of an operation method for image generation using an image generation model in an electronic device according to an embodiment, and FIG. 14 is a view illustrating an example of images by outpainting in an electronic device according to an embodiment.

Hereinafter, in the embodiment, the operations may be performed sequentially, but are not necessarily performed sequentially. For example, the order of the operations may be changed, and at least two operations may be performed in parallel. The operation method of FIG. 12 may be performed using an algorithm of an image generation model (e.g., the image generation model 301 of FIG. 3) as illustrated in FIG. 13.

Referring to FIGS. 12, 13, and 14, in operation 1201, an electronic device (e.g., the electronic device 101 of FIG. 1 and/or the electronic device 201 of FIGS. 2 and 4) according to an embodiment may display a first image (e.g., the first image 1410 of FIG. 14) stored in memory (e.g., the memory 130 of FIG. 1 and/or the memory 230 of FIG. 2) on a display (e.g., the display module 160 of FIG. 1 and/or the display 230 of FIG. 2). The electronic device may obtain a first image from a camera (e.g., the camera module 180 of FIG. 1) or an external electronic device (e.g., the electronic devices 102, 104 of FIG. 1 or the server 108) and store it in the memory, and when there is a request to execute an image generation operation, obtain the first image stored in the memory (e.g., void get_object_removal_outpainting(input_image) of FIG. 13). For example, the electronic device may obtain a mask (or mask information) corresponding to the first image.

In operation 1203, the electronic device may segment a first part related to at least one object (e.g., a person or an animal) and a background part in the first image (e.g., the first image 1410 of FIG. 14) through an image classification model (e.g., the image classification model 310 of FIGS. 3 and 6), and perform a segmentation operation of the first image 1410 for obtaining result information including information on each of the segmented part (e.g., including the first part 1411 of FIG. 14) and the background part (e.g., seginfo=getSegmentation(input_image)).

In operation 1205, the electronic device may identify, based on the user input, whether the classified first part is related to a person or an animal (e.g., for seg in seginfo: int type = Classification(seg)// pet or human of FIG. 13). As a result of the identification, when the first part is not related to a person or an animal, the electronic device may perform operation 1207. When the first part is related to a person or an animal, the electronic device may perform operation 1209.

In operation 1207 (operation 1205-No), the electronic device may transfer the first image 1410 identified in the image classification model and the classification information of the first image 1410 to a generative AI model (e.g., the generative AI model 330 of FIGS. 3 and 6), and provide a command (e.g., a second command) to perform an outpainting operation on the first image 1410 by the generative AI model. A resulting image (e.g., a fourth image) generated through the outpainting operation by the generative AI model may be obtained. Here, since the generated resulting image (e.g., the fourth image) does not include the first part related to the person or the animal, the electronic device may not perform an outpainting operation on the first image 1410, or even if the outpainting operation is performed, may generate a fourth image in which the parts classified in the first image 1410 are not related to a person or an animal. Thereafter, the electronic device may perform operation 1223. As another example, even if the original image (e.g., the first image) does not include an object representing at least one of a person or an animal, the electronic device may identify a part to be deleted for an object included in the original image, and perform an outpainting operation on a region corresponding to the identified part.

In operation 1209 (operation 1205-Yes), the electronic device may identify whether the first part 1411 related to the person or the animal is located at a boundary (e.g., whether it is cut off by the boundary) (e.g., if seg.position in boundary: of FIG. 13). As a result of the identification, when the first part 1411 is located at the boundary, operation 1211 may be performed, and when not, operation 1223 may be performed.

In operation 1211 (operation 1209-Yes), the electronic device may identify whether a face exists (e.g., is detected) in the first part 1411 related to the person or the animal among the at least one object through the image classification model (e.g., if getFace(seg):). As a result of the identification, when a face exists (e.g., is detected) in the identified first part 1411, the electronic device may perform operation 1213, and when no face exists (e.g., is not detected), may perform operation 1217. The electronic device may detect a face in the first object 1411 based on the first information of the first part 1411 using information learned through a deep learning technology (e.g., model). According to an embodiment, the electronic device may, when identifying whether a face exists in the first part 1411, identify whether a face having a complete facial form is detected. Here, the complete facial form may be identified based on information learned through deep learning. As a result of the identification, when a face having a complete facial form is not detected, the electronic device may determine that no face exists (e.g., face detection has failed), and identify the first part 1411 as a part for deletion processing.

In operation 1213 (operation 1211-Yes), the electronic device may, when a face (e.g., a face having a complete facial form) exists (e.g., is detected) in the first part 1411, generate a bounding box (e.g., a second bounding box) for outpainting of the first part 1411 (e.g., box = getSegBoundingBox(padd)) based on the first information on the first part 1411 (e.g., including pixel information, padding information, and/or position information), and identify a ratio (e.g., a second ratio) that the generated bounding box (e.g., the width of the second bounding box) occupies in the first image 1410.

In an embodiment, when a face is detected in the identified first part 1411 or when a face having a complete facial form is detected, the electronic device may perform an operation of comparing the ratio (e.g., the second ratio) that the bounding box (e.g., the width of the second bounding box) occupies in the first image 1410 with a threshold (image.width* threshold) (e.g., a second threshold) as a predetermined condition related to deletion to determine whether to perform an outpainting operation. In operation 1215, the electronic device may identify whether the ratio (e.g., the second ratio) that the bounding box (e.g., the width of the second bounding box) occupies in the first image 1410 is less than the second threshold (e.g., a designated first condition) (e.g., if seg.width < (image.width* threshold): of FIG. 13). As a result of the identification, the electronic device may, when the second ratio is less than the second threshold, perform operation 1217, and when the second ratio is greater than or equal to the second threshold, perform operation 1223. For example, when the first part 1411 represents a person, the second threshold may be set to approximately 20%, and when the first part 1411 represents an animal, the second threshold may be set to approximately 10%. Accordingly, when the first part is a person, the electronic device may perform a more robust editing (e.g., filter) by reducing the region to be generated. The electronic device may, when a face exists in the first part and the ratio (e.g., the second ratio) that the bounding box (e.g., the width of the second bounding box) occupies in the first image 1410 is smaller than the second threshold, identify that there is much body region to be generated, and identify the first part 1411 as a part to be deleted.

According to an embodiment, the electronic device may obtain (e.g., generate) a mask image including first mask information corresponding to the first information on the first part 1411 through the image classification model. The electronic device may transfer the first information and the first image 1410 from the image classification model to a preprocessing model (e.g., the preprocessing model 320 of FIGS. 3 and 6). Here, the first information may include mask information (e.g., first mask information) related to the first part. According to an embodiment, the electronic device may transfer a mask image including the first mask information to the generative AI model by the image classification model. According to an embodiment, the electronic device may, when as a result of the identification in operation 1211 no face exists (e.g., is not detected), identify that only a body is detected in the identified first part, and identify the identified first part as a part for deletion processing. A mask image including first mask information corresponding to the first information may be obtained (e.g., generated) by adding the first information on the first part 1411 to a mask through the image classification model (e.g., objectRemoval.add(seg) of FIG. 13). According to an embodiment, the electronic device may, when as a result of the identification in operation 1215 a face exists and the ratio (e.g., the second ratio) that the bounding box (e.g., the width of the second bounding box) occupies in the first image 1410 is smaller than the second threshold, obtain (e.g., generate) a mask image (e.g., the mask image 630 of FIG. 6) including first mask information corresponding to the first information by adding the first information on the first object 1411 to the mask so as to remove the first object 1411 (or a first region corresponding to the first object) identified as an object to be deleted (e.g., objectRemoval.add(mask) of FIG. 13). Here, when a face exists in the first object 1411 and the ratio (e.g., the second ratio) that the bounding box (e.g., the width of the box) occupies in the first image 1410 is smaller than the second threshold, the body region or face region to be generated during outpainting becomes large. Accordingly, as illustrated in FIG. 14, the electronic device may need to remove the first object 1411 (or the first region corresponding to the first object) so that an image 1430 including an object 1431 of another shape (or form) unintended by the user (e.g., an object with another face or an object including an unintended body region) is not generated.

In operation 1217 (operation 1211-No or operation 1215-Yes), the electronic device may delete a region (e.g., a first region) corresponding to the first part 1411 in the first image 1410 based on the first information and the first image 1410 and/or the mask information of the mask image in the preprocessing model. The electronic device may obtain (e.g., generate) a second image (e.g., the second image 620 of FIG. 6) including an image region corresponding to the first part deleted in the preprocessing model.

In operation 1219, the electronic device may transfer the obtained second image to the generative AI model (e.g., the generative AI model 330 of FIGS. 3 and 6). The electronic device may transfer the mask image from the image classification model or the preprocessing model to the generative AI model. The electronic device may obtain a first command to perform an inpainting operation based on the second image and the first information using the generative AI model 330. In operation 1221, the electronic device may transfer the first command to the generative AI model to obtain a third image generated by the generative AI model such that the image region corresponding to the first part is not related to the person or the animal. The generative AI module may, based on the second image and the first information, perform an outpainting operation on the first part deleted from the second image to generate an image of the image region for the deleted first part, and obtain (e.g., generate) a third image 1420 (e.g., the third image 640 of FIG. 6) including the image region having the generated image. The electronic device may, using the outpainting operation in the generative AI model, generate a new simulated image by simulating a background part or another part of a region adjacent to the image region corresponding to the deleted first part, and apply the simulated image to the image region corresponding to the deleted first part to generate the image of the image region. The generated image may be edited to be naturally connected to a background image or another part (e.g., an object that does not represent a person or an animal).

Thereafter, the electronic device may identify whether the generation operation of the first image 1410 is completed in operation 1223, and when completed, terminate the operation, and when not, perform operation 1203 again.

In the description of the operation of FIG. 12 described above, operations 1203 to 1217 may be specific operations for identifying whether a preset condition for identifying whether the first part needs to be deleted is satisfied by the image classification model. For example, when a plurality of parts are identified in the first image, operations 1203 to 1217 may be repeatedly performed. In operation 1219, a second image in which the image region corresponding to the first part to be removed is deleted may be obtained, and in operation 1221, an image of the image region corresponding to the deleted first part may be generated, and the third image 1420 including the image region having the generated image may be obtained. For example, when a plurality of parts are identified in the first image 1410, classification and classification information may be obtained for all of the plurality of parts identified in operation 1203 at once. Accordingly, without repeatedly performing operations 1205 to 1217, it may be identified whether a preset condition for identifying whether the plurality of parts all at once need deletion is satisfied in operations 1205 to 1217.

According to an embodiment, the electronic device may display the third image obtained through image editing according to the operation methods of FIGS. 8, 9, and 12 described above on the display, and transmit the obtained third image to an external electronic device via communication circuitry (e.g., the communication module 190 of FIG. 1, the communication circuitry 250 of FIG. 2).

According to an embodiment, the electronic device may transmit the second image including the image region corresponding to the deleted first part and the mask image to an external electronic device (e.g., a server) via the communication circuitry. The external electronic device (e.g., the server) may, using an AI model for image generation, generate, based on the second image and the mask image, an image such that the image region corresponding to the first part included in the second image is not related to a person or an animal through an in/out painting operation, and generate a third image including the image region having the generated image. According to an embodiment, the processor 210 may receive the third image generated by the external electronic device (e.g., the server), and store the received third image in the memory (e.g., the memory 130 of FIG. 1, the memory 220 of FIG. 2) and/or display it on the display.

According to an embodiment, the electronic device may, through the operations of FIG. 12 described above, delete the first part 1411 of the first image 1410, generate an image for the image region corresponding to the first part 1411 through the outpainting operation, and obtain the third image 1420 including the image region having the generated image and not related to a person or an animal. Accordingly, as illustrated in FIG. 14, the electronic device may prevent another object 1431 (e.g., an image related to a person or an animal) unintended by the user from being generated through the outpainting operation, as in the image 1430 generated without applying the operations of FIG. 12.

According to an embodiment, a method of operation in an electronic device (e.g., the electronic device 101 of FIG. 1 and/or the electronic device 201 of FIGS. 2 and 4) may include obtaining a user input for requesting to remove a first part (e.g., the first part 411 of FIGS. 4A and 4B, the first part 511 of FIG. 5, and the first part 611 of FIG. 6) of a first image (e.g., the first image 410 of FIGS. 4A and 4B, the first image 510 of FIG. 5, and the first image 610 of FIG. 6) stored in memory of the electronic device (e.g., the memory 130 of FIG. 1 and the memory 220 of FIG. 2) using a user interface including the first image.

According to an embodiment, the method may include identifying, based on the user input, whether the first part is related to a person.

According to an embodiment, the method may include, based on identifying that the first part is related to the person, obtaining a second image (e.g., the second image 420 of FIGS. 4A and 4B, the second image 520 of FIG. 5, and the second image 620 of FIG. 6) excluding the first part from the first image and first information related to the first part. According to an embodiment, the first information may include information for preventing an image region corresponding to the first part from being generated as the person.

According to an embodiment, the method may include, based on a first command to perform at least one of inpainting or outpainting based on the second image and the first information using a generative AI model (e.g., the generative AI model 330 of FIGS. 3, 5, and 6), obtaining a third image (e.g., the third image 440 of FIGS. 4A and 4B, the third image 540 of FIG. 5, and the third image 640 of FIG. 6) generated by the generative AI model such that the image region corresponding to the first part is not related to the person or the animal by performing at least one of the inpainting or the outpainting.

According to an embodiment, the method may include identifying, based on the user input, whether the first part is related to an animal, and based on identifying that the first part is related to the animal, obtaining a third image 440, 540, 640 generated by the generative AI model such that the image region corresponding to the first part is not related to the animal by performing at least one of the inpainting or the outpainting based on the first command. According to an embodiment, the first information may include information for preventing the image region corresponding to the first part from being generated as the animal.

According to an embodiment, the first information may include mask information related to the first part, and the mask information may include a graphic object set to distinguish the first part and information for preventing a part corresponding to the graphic object from being generated as the person or the animal.

According to an embodiment, the operation of obtaining the second image excluding the first part from the first image and the first information related to the first part may include identifying whether a face of the person or the animal is detected in the first part, and based on identifying that the face of the person or the animal is detected in the first part, generating the first information related to the first part.

According to an embodiment, the operation of obtaining the second image excluding the first part from the first image and the first information related to the first part may include obtaining the second image excluding the first part from the first image using a preprocessing model (e.g., the preprocessing model 320 of FIGS. 3, 4A, 5, and 6) stored in the memory.

According to an embodiment, the operation of obtaining the second image excluding the first part from the first image and the first information related to the first part may include: based on identifying that the face of the person or the animal is not detected in the first part, identifying a first ratio value occupied by the first part in a first bounding box including the first part; and based on the first ratio value being greater than or equal to a first threshold, generating the first information related to the first part and obtaining the second image excluding the first part from the first image using the preprocessing model.

According to an embodiment, the operation of obtaining the second image excluding the first part from the first image and the first information related to the first part may include: based on identifying that the face of the person or the animal is not detected in the first part, identifying a second ratio value that a second bounding box including the first part occupies in the first image; and based on the second ratio value being less than a second threshold, generating the first information related to the first part and obtaining the second image excluding the first part from the first image using the preprocessing model.

According to an embodiment, the method may further include, based on identifying a plurality of parts representing at least one of the person or the animal in the first image, identifying whether the plurality of parts are located at a boundary line of the first image, and based on identifying a second part of the first image that is not located at the boundary line among the plurality of parts, maintaining the second part in the first image without excluding the second part.

According to an embodiment, the method may further include, based on the user input, controlling the display to display the first image on an execution screen of an application related to image generation, and based on obtaining the third image, controlling the display to display the third image on the execution screen.

According to an embodiment, the method may further include, based on obtaining the third image, transmitting the third image to an external electronic device via communication circuitry of the electronic device.

According to an embodiment, in a non-transitory storage medium storing a program, the program includes instructions executable, when executed by at least one processor (e.g., the processor 120 of FIG. 1 and the processor 210 of FIG. 2) of an electronic device (e.g., the electronic device 101 of FIG. 1 and the electronic device 201 of FIGS. 2 and 4), to cause the electronic device to perform: an operation of obtaining a user input for requesting to remove a first part (e.g., the first part 411 of FIGS. 4A and 4B, the first part 511 of FIG. 5, and the first part 611 of FIG. 6) of a first image (e.g., the first image 410 of FIGS. 4A and 4B, the first image 510 of FIG. 5, and the first image 610 of FIG. 6) stored in memory of the electronic device (e.g., the memory 130 of FIG. 1 and the memory 230 of FIG. 2) using a user interface including the first image, an operation of identifying, based on the user input, whether the first part is related to a person, an operation of, based on identifying that the first part is related to the person, obtaining a second image (e.g., the second image 420 of FIGS. 4A and 4B, the second image 520 of FIG. 5, and the second image 620 of FIG. 6) excluding the first part from the first image and first information related to the first part. The first information includes information for preventing an image region corresponding to the first part from being generated as the person, and an operation of, based on a first command to perform at least one of inpainting or outpainting based on the second image and the first information using a generative AI model (e.g., the generative AI model 330 of FIGS. 3, 4A, 5, and 6), obtaining a third image (e.g., the third image 440 of FIGS. 4A and 4B, the third image 540 of FIG. 5, and the third image 640 of FIG. 6) generated by the generative AI model such that the image region corresponding to the first part is not related to the person by performing at least one of the inpainting or the outpainting.

According to an embodiment, in a non-transitory storage medium storing a program, the program may include, when executed by at least one processor of an electronic device, an operation that causes the electronic device to identify, based on the user input, whether the first part is related to an animal, and based on identifying that the first part is related to the animal, an operation of obtaining a third image (e.g., the third image 440 of FIGS. 4A and 4B, the third image 540 of FIG. 5, and the third image 640 of FIG. 6) generated by the generative AI model such that the image region corresponding to the first part is not related to the animal by performing at least one of the inpainting or the outpainting based on the first command. According to an embodiment, the first information may include information for preventing the image region corresponding to the first part from being generated as the animal.

According to an embodiment, the first information may include mask information related to the first part, and the mask information may include a graphic object set to distinguish the first part and information for preventing a part corresponding to the graphic object from being generated as the person or the animal.

According to an embodiment, the operation of obtaining the second image excluding the first part from the first image and the first information related to the first part may include instructions executable to perform: an operation of identifying whether a face of the person or the animal is detected in the first part; and based on identifying that the face of the person or the animal is detected in the first part, an operation of generating the first information related to the first part.

According to an embodiment of the present disclosure, the electronic device may generate an edited image by deleting an object such as a person or an animal, without generating a generalized face of a person or an animal based on a previously learned person or animal during image editing (in/outpainting) of an object such as a person or an animal. Accordingly, when inpainting or outpainting an original image (e.g., the first image), the electronic device may not generate a part related to a new person or animal that the user does not want or that is meaningless, and may generate a more natural resulting image. In addition, various effects directly or indirectly understood through the present document may be provided. The effects obtainable from the present disclosure are not limited to the effects mentioned above, and other effects not mentioned will be clearly understood by those skilled in the art to which the present disclosure pertains from the following description.

As used herein, the term "if" will be understood to mean "when, upon," "in response to determining," or "in response to detecting," depending on the context. Similarly, "when determined to," or "when [the stated condition or event] is detected," will optionally be understood to mean "upon determining," or "in response to determining," "upon detecting [the stated condition or event]," or "in response to detecting [the stated condition or event]."

The apparatus described above may be implemented as a hardware component, a software component, and/or a combination of hardware components and software components. For example, the apparatus and components described in the embodiments may be implemented using one or more general-purpose computers or special-purpose computers, such as a processor, a controller, an arithmetic logic unit (ALU), a digital signal processor, a microcomputer, a field programmable gate array (FPGA), a programmable logic unit (PLU), a microprocessor, or any other device capable of executing and responding to instructions. The processing device (or processing circuitry) may execute an operating system (OS) and one or more software applications running on the operating system. In addition, the processing device may access, store, manipulate, process, and generate data in response to execution of software. For convenience of understanding, although a case in which one processing device is used has been described, those skilled in the art will appreciate that the processing device may include a plurality of processing elements and/or a plurality of types of processing elements. For example, the processing device may include a plurality of processors or one processor and one controller. Further, other processing configurations, such as a parallel processor, are also possible.

Software may include a computer program, code, an instruction, or a combination of one or more of these, and may configure the processing device to operate as desired or instruct the processing device independently or collectively. Software and/or data may be embodied in any type of machine, component, physical device, computer storage medium, or device to be interpreted by the processing device or to provide an instruction or data to the processing device. The software may be distributed over networked computer systems, and stored or executed in a distributed manner. The software and data may be stored in one or more computer-readable recording media.

The method according to the embodiment may be implemented in the form of a program instruction that may be performed through various computer means, and recorded on a computer-readable medium. In this case, the medium may continuously store a computer-executable program, or may temporarily store it for execution or download. Further, the medium may be various recording means or storage means in the form of a single piece or several pieces of combined hardware, and is not limited to a medium directly connected to a certain computer system, but may exist in a distributed manner over a network. Examples of the medium may include those configured to store program instructions, including magnetic media such as a hard disk, a floppy disk, and a magnetic tape, optical recording media such as a CD-ROM and a DVD, a magneto-optical medium such as a floptical disk, and a ROM, a RAM, a flash memory, and the like. Further, as examples of other media, there may also be recording media or storage media managed by an app store distributing applications or by a site, a server, or the like supplying or distributing various other software.

Although the embodiments have been described by the limited embodiments and the drawings as described above, various modifications and variations are possible from the above description by those skilled in the art. For example, even when the described techniques are performed in a different order from the described method, and/or components of the described system, structure, device, circuit, and the like are coupled or combined in a different form from the described method, or are replaced or substituted by other components or equivalents, suitable results may be achieved.

Therefore, other implementations, other embodiments, and equivalents to the claims also fall within the scope of the claims described below.

The embodiments disclosed in the present document are provided for the description and understanding of the disclosed technical content, and do not limit the scope of the technology described in the present document. Accordingly, the scope of the present document should be construed as including all changes or various embodiments based on the technical spirit of the present document.

The electronic device according to various embodiments disclosed in the present document may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

The various embodiments of the present document and the terms used herein are not intended to limit the technical features described in the present document to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the present document may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

The various embodiments of the present document may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to an embodiment disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{™}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

## Claims

1. An electronic device (101, 201) comprising:
a display (160, 230);
communication circuitry (190, 250);
at least one processor (120, 210) including processing circuitry; and
memory (130, 220) including one or more storage media storing instructions, wherein the instructions, when executed by the at least one processor individually or collectively, cause the electronic device to:
obtain a user input for requesting to remove a first part (411, 511, 611) of a first image (410, 510, 610) stored in the memory using a user interface including the first image;
based on the user input, identify whether the first part is related to a person;
based on identifying that the first part is related to the person, obtain a second image (420, 520, 620) excluding the first part from the first image and first information related to the first part, wherein the first information includes information for preventing an image region corresponding to the first part from being generated as the person; and
based on a first command to perform at least one of inpainting or outpainting based on the second image and the first information using a generative artificial intelligence (AI) model (330), obtain a third image (440, 540, 640) generated by the generative AI model such that the image region corresponding to the first part is not related to the person by performing at least one of the inpainting or the outpainting.

2. The electronic device of claim 1, wherein the instructions, when executed by the at least one processor individually or collectively, cause the electronic device to:
based on the user input, identify whether the first part is related to an animal; and
based on identifying that the first part is related to the animal, obtain a third image (440, 540, 640) generated by the generative AI model such that the image region corresponding to the first part is not related to the animal by performing at least one of the inpainting or the outpainting based on the first command,
wherein the first information includes information for preventing the image region corresponding to the first part from being generated as the animal, wherein the first information includes mask information related to the first part, and
wherein the mask information includes a graphic object set to distinguish the first part and information for preventing a part corresponding to the graphic object from being generated as the person or the animal.

3. The electronic device of claim 1 or 2, wherein the instructions, when executed by the at least one processor individually or collectively, cause the electronic device to:
identify whether a face of the person or the animal is detected in the first part;
based on identifying that the face of the person or the animal is detected in the first part, generate the first information related to the first part; and
obtain the second image excluding the first part from the first image using a preprocessing model (320) stored in the memory.

4. The electronic device of any one of claims 1 to 3, wherein the instructions, when executed by the at least one processor individually or collectively, cause the electronic device to:
based on identifying that the face of the person or the animal is not detected in the first part, identify a first ratio value occupied by the first part in a first bounding box including the first part; and
based on the first ratio value being greater than or equal to a first threshold, generate the first information related to the first part and obtain the second image excluding the first part from the first image using the preprocessing model.

5. The electronic device of any one of claims 1 to 4, wherein the instructions, when executed by the at least one processor individually or collectively, cause the electronic device to:
based on identifying that a face of the person or the animal is not detected in the first part, identify a second ratio value that a second bounding box including the first part occupies in the first image; and
based on the second ratio value being less than a second threshold, generate the first information related to the first part and obtain the second image excluding the first part from the first image using the preprocessing model.

6. The electronic device of any one of claims 1 to 5, wherein the instructions, when executed by the at least one processor individually or collectively, cause the electronic device to:
based on identifying a plurality of parts representing at least one of the person or the animal in the first image, identify whether the plurality of parts are located at a boundary line of the first image; and
based on identifying a second part of the first image that is not located at the boundary line among the plurality of parts, maintain the second part in the first image without excluding the second part.

7. The electronic device of any one of claims 1 to 6, wherein the instructions, when executed by the at least one processor individually or collectively, cause the electronic device to:
based on the user input, control the display to display the first image on an execution screen of an application related to image generation;
based on obtaining the third image, control the display to display the third image on the execution screen; and
based on obtaining the third image, control the communication circuitry to transmit the third image to an external electronic device.

8. A method of operation in an electronic device (101, 201), the method comprising:
obtaining a user input for requesting to remove a first part (411, 511, 611) of a first image (410, 510, 610) stored in memory (130, 220) of the electronic device using a user interface including the first image;
identifying, based on the user input, whether the first part is related to a person;
based on identifying that the first part is related to the person, obtaining a second image (420, 520, 620) excluding the first part from the first image and first information related to the first part, wherein the first information includes information for preventing an image region corresponding to the first part from being generated as the person; and
based on a first command to perform at least one of inpainting or outpainting based on the second image and the first information using a generative AI model (330), obtaining a third image (440, 540, 640) generated by the generative AI model such that the image region corresponding to the first part is not related to the person by performing at least one of the inpainting or the outpainting.

9. The method of claim 8, wherein the method comprises:
identifying, based on the user input, whether the first part is related to an animal; and
based on identifying that the first part is related to the animal, obtaining a third image (440, 540, 640) generated by the generative AI model such that the image region corresponding to the first part is not related to the animal by performing at least one of the inpainting or the outpainting based on the first command,
wherein the first information includes information for preventing the image region corresponding to the first part from being generated as the animal,
wherein the first information includes mask information related to the first part,
wherein the mask information includes a graphic object set to distinguish the first part and information for preventing a part corresponding to the graphic object from being generated as the person or the animal.

10. The method of claim 8 or 9, wherein obtaining the second image excluding the first part from the first image and the first information related to the first part comprises:
identifying whether a face of the person or the animal is detected in the first part;
based on identifying that the face of the person or the animal is detected in the first part, generating the first information related to the first part; and
obtaining the second image excluding the first part from the first image using a preprocessing model (320) stored in the memory.

11. The method of any one of claims 8 to 10, wherein obtaining the second image excluding the first part from the first image and the first information related to the first part comprises:
based on identifying that the face of the person or the animal is not detected in the first part, identifying a first ratio value occupied by the first part in a first bounding box including the first part; and
based on the first ratio value being greater than or equal to a first threshold, generating the first information related to the first part and obtaining the second image excluding the first part from the first image using the preprocessing model.

12. The method of any one of claims 8 to 11, wherein obtaining the second image excluding the first part from the first image and the first information related to the first part comprises:
based on identifying that the face of the person or the animal is not detected in the first part, identifying a second ratio value that a second bounding box including the first part occupies in the first image; and
based on the identified second ratio value being less than a second threshold, generating the first information related to the first part and obtaining the second image excluding the first part from the first image using the preprocessing model.

13. The method of any one of claims 8 to 12, wherein the method further comprises:
based on identifying a plurality of parts representing at least one of the person or the animal in the first image, identifying whether the plurality of parts are located at a boundary line of the first image;
based on identifying a second part of the first image that is not located at the boundary line among the plurality of parts, maintaining the second part in the first image without excluding the second part;
based on the user input, controlling the display to display the first image on an execution screen of an application related to image generation;
based on obtaining the third image, controlling the display to display the third image on the execution screen; and
based on obtaining the third image, transmitting the third image to an external electronic device via communication circuitry of the electronic device.

14. A non-transitory storage medium storing a program, wherein the program, when executed by at least one processor (120, 210) of an electronic device (101, 201), includes instructions executable to cause the electronic device to perform:
an operation of obtaining a user input for requesting to remove a first part (411) of a first image (410) stored in memory (130) of the electronic device using a user interface including the first image;
an operation of identifying, based on the user input, whether the first part is related to a person;
an operation of, based on identifying that the first part is related to the person, obtaining a second image (420) excluding the first part from the first image and first information related to the first part, wherein the first information includes information for preventing an image region corresponding to the first part from being generated as the person; and
an operation of, based on a first command to perform at least one of inpainting or outpainting based on the second image and the first information using a generative AI model (330), obtaining a third image (440, 540, 640) generated by the generative AI model such that the image region corresponding to the first part is not related to the person by performing at least one of the inpainting or the outpainting.

15. The non-transitory storage medium of claim 14, comprising instructions executable to cause the electronic device to perform:
an operation of identifying, based on the user input, whether the first part is related to an animal; and
an operation of, based on identifying that the first part is related to the animal, obtaining a third image (440, 540, 640) generated by the generative AI model such that the image region corresponding to the first part is not related to the animal by performing at least one of the inpainting or the outpainting based on the first command,
wherein the first information includes information for preventing the image region corresponding to the first part from being generated as the animal,
wherein the first information includes mask information related to the first part,
wherein the mask information includes a graphic object set to distinguish the first part and information for preventing a part corresponding to the graphic object from being generated as the person or the animal,
wherein the operation of obtaining the second image (420) excluding the first part from the first image and the first information related to the first part comprises instructions executable to perform:
an operation of identifying whether a face of the person or the animal is detected in the first part; and
based on identifying that the face of the person or the animal is detected in the first part, an operation of generating the first information related to the first part.
